Europäisches Patentamt

European Patent Office

Office européen des brevets

(19)

(11) Veröffentlichungsnummer : **0 396 076 B1**

## (12) EUROPÄISCHE PATENTSCHRIFT

(45) Veröffentlichungstag der Patentschrift :
**12.02.92 Patentblatt 92/07**

(51) Int. Cl.$^5$ : **F16L 59/00, C01B 33/155**

(21) Anmeldenummer : **90108206.5**

(22) Anmeldetag : **30.04.90**

(54) **Thermisches Isoliermaterial auf der Basis von pigmenthaltigen Kieselsäureaerogelen.**

(30) Priorität : **05.05.89 DE 3914850**

(43) Veröffentlichungstag der Anmeldung :
**07.11.90 Patentblatt 90/45**

(45) Bekanntmachung des Hinweises auf die
Patenterteilung :
**12.02.92 Patentblatt 92/07**

(84) Benannte Vertragsstaaten :
**CH DE FR GB IT LI NL SE**

(56) Entgegenhaltungen :
**DE-A-13 211 485**
**DE-A-13 235 708**
**DE-A-13 309 272**
**DE-C- 3 844 003**
**US-A-43 991 75**

(73) Patentinhaber : **BASF Aktiengesellschaft**
**Carl-Bosch-Strasse 38**
**W-6700 Ludwigshafen (DE)**

(72) Erfinder : **Wolff, Bernardo, Dr.**
**Rohrbacher Strasse 64**
**W-6900 Heidelberg (DE)**
Erfinder : **Mielke, Manfred**
**Hirtenau 50**
**W-6900 Heidelberg (DE)**
Erfinder : **Seybold, Guenther, Dr.**
**Friedrich-Strasse 14**
**W-6708 Neuhofen (DE)**
Erfinder : **Ostertag, Werner, Dr.**
**Oberer Bergelweg 2**
**W-6718 Gruenstadt (DE)**
Erfinder : **Fricke, Jochen, Prof. Dr.**
**Gieshuegelerstrasse 63**
**W-8708 Gerbrunn (DE)**
Erfinder : **Caps, Roland, Dr.**
**Bahnhofstrasse 30a**
**W-7128 Lauffen (DE)**

**Beschreibung**

Die vorliegende Erfindung betrifft ein neues thermisches Isoliermaterial auf der Basis von pigmenthaltigen Kieselsäureaerogelen, erhältlich durch

a) Umsetzung einer wäßrigen Dispersion aus Wasserglas und einem Pigment mit einer starken Säure und-/oder von Wasserglas mit einer pigmenthaltigen starken Säure zu einem pigmenthaltigen Kieselsäurehydrogel, wobei das Pigment dadurch charakterisiert ist, daß es Infrarotstrahlung der Wellenlänge 3-10 μm streut, absorbiert oder reflektiert,

b) weitgehende Befreiung des so erhaltenen pigmenthaltigen Kieselsäurehydrogels von ionischen Bestandteilen durch Auswaschen mit Wasser,

c) Verdrängung des im Hydrogel enthaltenen Wassers durch eine leichtsiedende und gegenüber dem pigmenthaltigen Kieselsäuregel inerte Flüssigkeit,

d) Erhitzen des so erhaltenen flüssigkeitshaltigen Kieselsäureregels unter vollständiger Bedeckung durch die Flüssigkeit auf überkritische Bedingungen und

e) anschließendes Entfernen der Flüssigkeit vom Feststoff durch Entspannungsverdampfung bei überkritischer Temperatur.

Weiterhin betrifft die Erfindung die Herstellung diesen thermischen Isoliermaterials.

Thermische Isoliermaterialien auf anorganischer Basis zeichnen sich gegenüber organischen Materialien, z.B. Schaumkunststoffen, insbesondere durch einen breiteren thermischen Anwendungsbereich aus, der sich von Raumtemperatur bis zu Temperaturen um 650°C erstreckt.

Als schüttbare thermische Isoliermaterialien natürlicher Herkunft sind Minerale wie Perlit, Vermikulit oder Kieselgel bekannt, deren Isolationswirkung allerdings für viele Zwecke nicht ausreicht.

Wirksamere Isoliermaterialien stellen synthetisch hergestellte Kieselsäuregele dar, beispielsweise hochdisperse Kieselsäure, wie sie durch Flammenhydrolyse erhältlich ist. Dabei wird eine flüchtige Siliciumverbindung wie Siliciumtetrachlorid in einer Knallgasflamme zersetzt. An schließend werden die so entstandenen Primärteilchen zu Teilchenverbänden agglomeriert. Nachteile dieser Materialien sind die mit steigender Temperatur stark zunehmende Wärmeleitfähigkeit sowie die starke Staubentwicklung und die Instabilität von lockeren Schüttungen, wie sie für die Isolierwirkung erforderlich sind.

Kieselsäureaerogele, wie sie beispielsweise aus der US-A-4 667 417 bekannt sind, weisen diese Nachteile nur in geringerem Maße auf, vermögen aber auch nicht gänzlich zu befriedigen. Man erhält diese Gele durch Ausfällen der Kieselsäure aus Wasserglas mittels einer Säure, Auswaschen der ionischen Bestandteile aus dem Hydrogel mit Wasser, Verdrängung des Wassers durch eine leichtsiedende, wasserlösliche organische Flüssigkeit wie Methanol, Erhitzen des so entstandenen "Alkogels" in Gegenwart dieser Flüssigkeit unter überkritischem Druck auf überkritische Temperatur und Entfernung der Flüssigkeit durch Entspannungsverdampfung bei der überkritischen Temperatur. Gewünschtenfalls kann die wasserlösliche Flüssigkeit vor der überkritischen Trocknung durch eine wasserunlösliche organische Flüssigkeit oder auch flüssiges Kohlendioxid ausgetauscht werden.

Das bei diesem Trocknungsprozeß entstandene großvolumige und großporige Kieselsäureaerogel kann durch Mahlen in Granulatform überführt werden und ist mechanisch relativ stabil, so daß sich das Volumen von Schüttungen praktisch nicht verringert und besonders gut isolierende Schüttungen resultieren. Eine spezielle Methode zur Herstellung kleiner Aerogelteilchen besteht nach der DE-A-21 03 243 darin, Wasserglas und Säure aus einer Mischdüse zu verspritzen, wobei man tropfenförmige Teilchen erhält.

Während die Wärmeleitung dieser Aerogele praktisch temperaturunabhängig ist, nimmt die Durchlässigkeit für Strahlungswärme (Infrarotstrahlung) mit steigender Temperatur zu. Man hat die Kieselsäuregele, wie beispielsweise aus der DE-A-28 06 367 und der DE-C2-30 38 142 bekannt ist, daher mit Pigmenten vermischt, welche die Infrarotstrahlung besonders im Bereich von 3 bis 10 μm streuen, absorbieren oder reflektieren, so daß die isolierende Schicht auch für diese Strahlung weitgehend undurchlässig wird. Die Herstellung derartiger Mischungen mit gleichmäßiger Pigmentverteilung ist verfahrenstechnisch jedoch schwierig. Außerdem ist in diesen Fällen regelmäßig die Mitverwendung von Verfestigungsmitteln wie keramischen Fasern erforderlich.

In der EP-A1-13 387 ist ein Verfahren zur Herstellung von pigmenthaltiger hochdisperser Kieselsäure durch direkte Coagglomeration der Komponenten während bzw. nach der flammenhydrolytischen Zersetzung beschrieben. Die bisher bekannten Mischungen sind nur in verdichteter Form zu verwenden, und insbesondere die Pulvermischungen dürfen mechanisch nicht beansprucht werden, da sie zur Entmischung neigen.

Der Erfindung lag daher die Aufgabe zugrunde, diesen Mängeln abzuhelfen.

Demgemäß wurde das eingangs definierte thermische Isoliermaterial gefunden.

Weiterhin wurde das hierdurch definierte Verfahren zur Herstellung dieses Materials gefunden.

Das erfindungsgemäße pigmenthaltige Kieselsäureaerogel stellt eine temperaturfeste, niedrigdichte, hochporöse Matrix dar, in welche die Pigmentteilchen eingebaut werden. Charakteristische Daten sind eine Dichte von 70 bis 500 kg/m³, Porositäten von 77 bis 97 % und mittlere Porendurchmesser von 0,01 bis 0,05 μm. Bei Raumtemperatur ergibt sich für ein granuliertes Kieselsäureaerogel der Dichte 200 kg/m³ je nach Partikelgröße eine Wärmeleitfähigkeit von 0,022 bis 0,030 W/mK, die immer für eine Mitteltemperatur angegeben ist und wie folgt definiert ist:

$$\text{Wärmeleitfähigkeit } \lambda = \frac{\text{Leistung [W]}}{\text{Länge [m] . Temperatur [K]}}$$

Als Pigmente, die Infrarotstrahlung der Wellenlänge 3 bis 10 μm streuen, absorbieren oder reflektieren, eignen sich vor allem Ruß, Titandioxid, Chromeisenstein $Cr_xFe_{2-x}O_3(x=0,3-2, 0)$, Magnetit $Fe_3O_4$, Rotschlamm, Glimmer, Talk, Kupfer oder Gemische dieser Pigmente, wobei der Einsatz von Ruß bzw. Magnetit aufgrund ihrer Oxidationsanfälligkeit auf Temperaturen unterhalb von 400 bzw. 250°C begrenzt ist. Weitere geeignete Pigmente auf anorganischer Basis sind Oxide wie Aluminiumoxid, Chrom(III)oxid, Zinnstein, Mangan(III)oxid, Braunstein, Zirkondioxid, Ilmenit $FeTiO_3$, Spinell $MgAl_2O_4$ und Cobaltspinell $CoAl_2O_4$, Alumosilicate wie Tone, Metallcarbide, -silicide und -nitride, polymere komplexe Metallcyanide wie Berliner Blau, elementare Metalle wie Aluminium, Mangan, Eisen, Nickel, Palladium, Platin, Silber und Gold sowie Ultramarin und organische Farbstoffe wie Phthalocyanine und Kohlenstoffasern mit einem Durchmesser von 1 bis 20 μm und einer Länge von 2 bis 200 μm.

Der Pigmentgehalt im pigmenthaltigen Kieselsäureaerogel kann zwischen 0,5 und 75 Gew.-% betragen, vorzugsweise zwischen 5 und 40 Gew.%, wobei insbesondere im Falle sehr fein verteilter Pigmente geringe Mengen genügen.

Die Pigmentteilchen sollen zweckmäßigerweise zu über 90 % einen mittleren größten Durchmesser von 0,01 bis 20 μm aufweisen. Wie festgestellt wurde, bleibt die Kieselsäurematrix beim Einbau dieser Teilchen erhalten.

Obwohl das Pigment für sich allein genommen eine höhere Wärmeleitfähigkeit als das Kieselgel aufweist, wird die Isolationswirkung des Kieselgels, vor allem bei höheren Temperaturen, durch den Pigmentzusatz erhöht. Voraussetzung dafür ist eine homogene Verteilung der Pigmentteilchen in der Matrix, die durch das erfindungsgemäße Verfahren erreicht wird.

Ausgangsstoffe für die Herstellung des erfindungsgemäßen thermischen Isoliermaterials sind handelsübliche wäßrige Wasserglaslösungen, die vorzugsweise auf Konzentrationen von 10 bis 20 Gew.-% $SiO_2$ verdünnt werden, und eine Säure, vorzugsweise 20 bis 40 gew.-%ige Schwefelsäure oder 50 bis 98 gew.-%ige Ameisensäure.

In einer oder beiden Lösungen wird das zuzusetzende Pigment unter Zuhilfenahme von Rührgeräten wie Dissolvern oder Dispermaten bzw. anderer Dispergiermaschinen wie Perlmühlen oder Attritoren dispergiert. In manchen Fällen empfiehlt sich der Zusatz eines Dispergiermittels, vorzugsweise Natriumligninsulfonat, in Mengen von 5 bis 10 Gew.-%, bezogen auf das Pigment, um die Agglomeration der Pigmentprimärteilchen zu verringern.

Durch ein Verlangsamen der Sedimentation der spezifisch schwereren Pigmente kann zusätzlich eine homogene Durchmischung der Ausgangskomponenten erreicht werden. Dazu können der Säure vor der Pigmentierung 0,1 bis 10 Gew.-%, bezogen auf das zuzusetzende Pigment, eines Verdickungsmittels, vorzugsweise hochdisperser Kieselsäure, zugegeben werden.

Die Umsetzung der Ausgangsstoffe kann sowohl diskontinuierlich als auch kontinuierlich erfolgen.

Bei diskontinuierlicher Arbeitsweise wird vorzugsweise die pigmenthaltige Säure vorgelegt, und die Wasserglaslösung wird unter kräftigem Rühren und unter Kühlen, vorzugsweise bei Temperaturen von 0 bis 5°C, zugetropft, bis das entstehende Sol einen pH-Wert von 2 bis 9, vorzugsweise von 3 bis 5, erreicht hat. Bei Sedimentationsneigung wird bis zur einsetzenden Gelierung gerührt, so daß das Hydrogel in Stücken anfällt; anderenfalls wird ein zusammenhängender Hydrogelkörper erhalten.

In einer bevorzugten Ausführungsform der kontinuierlichen Arbeitsweise werden die Ausgangslösungen in an sich bekannter Weise in einer Mischdüse intensiv vermischt. Die Dosierung der Komponenten wird so gewählt, daß das austretende Sol einen pH-Wert von 6 bis 8, vorzugsweise 7, aufweist und beim freien Fall durch die Luft in Form von Tropfen erstarrt, die in einem Wasserbecken aufgefangen werden.

Die weitere Verarbeitung des entstandenen pigmenthaltigen Hydrogels ist in beiden Fällen identisch.

Zur weitgehenden Entfernung der ionischen Bestandteile kann der Waschung mit Wasser eine saure Waschung, vorzugsweise mit 0,005 M Schwefelsäure oder 0,01 M Salzsäure, zwischengeschaltet werden.

Für die Verdrängung des im pigmenthaltigen Hydrogel enthaltenen Wassers eignet sich vor allem Methanol, daneben aber auch Ethanol, n-Propanol und Isopropanol. Diese Flüssigkeiten können in einem zweiten Schritt gewünschtenfalls durch eine weitere Flüssigkeit, beispielsweise flüssiges Kohlendioxid, ausgetauscht werden.

Die überkritische Trocknung zum pigmenthaltigen Kieselsäureaerogel erfolgt in an sich bekannter Weise in der Nähe des kritischen Punktes, im Fall einer methanolischen Suspension vorzugsweise bei einer Temperatur von 240 bis 270°C und einem Druck von 80 bis 100 bar.

Gewünschtenfalls kann die überkritische Trocknung in an sich bekannter Weise durch den Zusatz einer Organosiliciumverbindung wie beispielsweise Dimethyldimethoxysilan mit einer Hydrophobierung verbunden werden.

Durch anschließendes Mahlen kann das beim diskontinuierlichen Verfahren erhaltene Material zu einem Granulat mit einem mittleren größten Durchmesser von 0,01 bis 15 mm zerkleinert werden; resultierende Schüttdichten liegen im Bereich von 50 bis 800 kg/m³. Es besteht auch die Möglichkeit, das metastabile, intermediär entstehende Sol als Formkörper zu gießen.

Beim Spritzverfahren ergeben sich für die tropfenförmigen und sich durch besonders gute Rieselfähigkeit auszeichnenden Aerogelpartikel kleinste Teilchendurchmesser von 0,5 bis 1 mm, und es fällt keinerlei Staub an.

Das erfindungsgemäße thermische Isoliermaterial zeichnet sich durch eine homogene Verteilung des Pigmentes in der Kieselsäureaerogel-Matrix aus, die, im Gegensatz zu den bereits bekannten durch Pulvermischung entstandenen Materialien, auch starker mechanischer Beanspruchung bzw. Dauerbelastung, wie z.B. Vibration, standhält, so daß keine Entmischung der Bestandteile erfolgt und ein Zusatz weiterer Hilfsstoffe zur Stabilisierung der Mischung nicht erforderlich ist. Damit ist das erfindungsgemäße Produkt auch pneumatisch förderbar. In Granulatform eignet es sich aufgrund seiner Rieselfähigkeit und guten Schütt- und Fließeigenschaften sowie des geringen oder überhaupt nicht vorhandenen Staubanteils als Wärmedämmschüttgut, das, im Gegensatz zu Materialien auf der Basis von hochdisperser Kieselsäure, unter Eigendruck belastbar ist und Vakuumstabilität aufweist. Die Wärmeleitfähigkeit $\lambda$ des erfindungsgemäßen Materials ist gegenüber dem nicht pigmenthaltigen Kieselsäureaerogel insbesondere bei erhöhten Temperaturen deutlich herabgesetzt und nimmt bei 200°C Werte kleiner als 0,055 W/mK und bei 650°C Werte um 0,170-0,200 W/mK an. Demgegenüber beträgt die Wärmeleitfähigkeit eines pigmentfreien Kieselsäureaerogels der Schüttdichte 140 kg/m³ bei 150°C 0,057 W/mK, bei 250°C 0,160 WmK und bei 600°C mehr als 0,350 W/mK.

Diese sowie die in den folgenden Beispielen angegebenen Wärmeleitfähigkeiten wurden im Temperaturbereich von 0 bis 50°C Mitteltemperatur mit dem Wärmestrommeßplattengerät nach DIN 52616 und im Bereich von 100 bis 600°C Mitteltemperatur nach dem Zweiplattenverfahren in Anlehnung an DIN 52616 gemessen.

Beispiel 1

In 490 kg 32 gew.-%ige Schwefelsäure, der 1,2 kg Natriumligninsulfonat zugesetzt waren, wurden 12 kg Ruß eingetragen und unter Rühren mit einem Dissolver (Zahnscheibe mit 30 cm Durchmesser, 1 000 U/min) 30 min nachdispergiert. Diese Dispersion wurde mit verdünnter Natronwasserglaslösung (15 Gew.-% $SiO_2$) bei einem Druck von 2,5 bar in einer Düse intensiv vermischt. Das Mischungsverhältnis wurde so einreguliert, daß das nach einer Verweilzeit in der Düse von maximal 0,1 s ausgespritzte Sol einen pH-Wert von 7,1±0,1 aufwies.

Die in der Luft gelierenden und dann in einem Wasserbecken aufgefangenen Tropfen wurden solange mit Wasser gewaschen, bis der $Na_2O$-Gehalt, bezogen auf die getrockneten Hydrogelperlen, auf einen Wert von 0,04 Gew.-% gesunken war. Nach dreistündigem Waschen mit 56 l Methanol (in einer Säule von 8 l Füllvolumen und 10 cm Innendurchmesser) lag der Wassergehalt in den Gelkügelchen unter 1 Gew.-%.

Das tropfnasse pigmenthaltige Methanol-Kieselgel wurde nach Zusatz von weiteren 4 l Methanol in einem Autoklaven (25 cm Innendurchmesser, 6,5 cm Höhe) unter Stickstoff innerhalb von 6 h auf 270°C erhitzt, wobei der Druck auf 90 bar begrenzt wurde. Danach wurde innerhalb von 30 min isotherm entspannt. Das abgekühlte Produkt wurde dem Autoklaven entnommen und ca. 12 h bei einem Druck von 0,2 bar und einer Temperatur von 80°C nachgetrocknet.

Das erhaltene Produkt ist durch die in Tabelle 1 aufgeführten Daten charakterisiert.

Beispiel 2

Ausgehend von 204,3 kg 32 gew.-%iger Schwefelsäure, der 3,3 kg hochdisperse Kieselsäure und 19,4 kg Rutil der mittleren Primärteilchengröße 1,2 μm zugegeben wurden, wurde nach zweistündigem Nachdispergieren analog Beispiel 1 verfahren.

Charakteristische Daten s. Tabelle 1

Vergleichsbeispiel V

Analog Beispiel 1 wurde ein pigmentfreies und keine weiteren Zusatzstoffe enthaltendes Kieselsäureaerogel hergestellt, dessen charakteristische Daten zum Vergleich in Tabelle 1 aufgeführt sind.

4

Tabelle 1

| Beispiel | 1 | 2 | V |
|---|---|---|---|
| Pigmentgehalt | 5 Gew.-% Ruß | 8,5 Gew.-% Rutil | pigmentfrei |
| mittl.Größe der Granulatpartikel | 3 mm | 3 mm | 3 mm |
| Stoffdichte | 256 kg/m$^3$ | 251 kg/m$^3$ | 230 kg/m$^3$ |
| Schüttdichte | 147 kg/m$^3$ | 152 kg/m$^3$ | 140 kg/m$^3$ |
| Wärmeleitfähigkeit $\lambda$ bei 10°C | 0,025 W/mK | 0,022 W/mK | 0,023 W/mK |
| bei 150°C | 0,041 W/mK | 0,039 W/mK | 0,057 W/mK |
| zur pneumatischen Förderung benötigte Gasströme bei einem Rohrdurchmesser von 30 mm | – | 1000 l/h | 1500 l/h |
| 45 mm | – | 2500 l/h | 3500 l/h |

Die erfindungsgemäßen Materialien (Beispiele 1 und 2) weisen bei 150°C eine deutlich verringerte Wärmeleitfähigkeit auf.

Die gute pneumatische Förderbarkeit der erfindungsgemäßen Materialien ist im Fall von Beispiel 2 gezeigt.

Beispiel 3

In 149,2 ml 86 gew.-%iger Ameisensäure wurden 1,6 g hochdisperse Kieselsäure, 0,84 g Natriumligninsulfonat und 8,4 g Ofenruß (mittlere Primärteilchengröße 0,021 μm) in einem Labordispermaten (2 000 U/min) 15 min dispergiert. Die mittlere Agglomeratteilchengröße lag bei 6,5 μm. Zu dieser Dispersion wurden bei einer Temperatur von 0 bis 5°C unter andauerndem Rühren 339 ml Natronwasserglaslösung (18 Gew.-% SiO$_2$) gegeben.

Das innerhalb weniger Minuten gebildete Hydrogel wurde mechanisch zerkleinert und in einer Säule zunächst mit Wasser, dann mit 1 gew.-%iger Schwefelsäure (12 l in 6 h) und wieder mit Wasser gewaschen. Die Leitfähigkeit des Waschwassers betrug zuletzt weniger als 30 μSiemens. Anschließend wurde solange mit Methanol gewaschen, bis der Wassergehalt des abfließenden Methanols unter 0,5 Gew.-% gesunken war.

Das rußhaltige Methanol-Kieselgel wurde in einen Autoklaven mit 20 l Innenvolumen gegeben und dieser dann bis zur Hälfte mit Methanol aufgefüllt. Nach Zugabe von 500 ml Dimethyldimethoxysilan zur Hydrophobierung wurde analog Beispiel 1 verfahren.

| | |
|---|---|
| berechneter Rußgehalt | 9,9 Gew.-% |
| C-Gehalt | 16,6 Gew.-% |
| mittl. Größe der Granulatpartikel nach Mahlung | 0,5 mm |
| Wärmeleitfähigkeit $\lambda$ bei 260°C | 0,043 W/mK |
| Grad der Hydrophobierung | schwimmt länger als 24 h auf Wasser |

Beispiele 4 bis 10

Die analog Beispiel 3 verlaufende Umsetzung erfolgte innerhalb von 30 s und unter Rühren bis zur einsetzenden Gelierung (10 bis 15 min). Ausgangslösungen waren 255 g einer 88 gew.-%igen Ameisensäure (Lösung 1), in die eine bestimmte Menge Pigment (s. Tabelle 2) eindispergiert wurde (Beispiele 9 und 10: 10-fache Rührergeschwindigkeit), und 495 g einer Natronwasserglaslösung mit 18 Gew.-% SiO$_2$ (Lösung 2).

Das resultierende Gel wurde 6 h mit deionisiertem Wasser überschichtet und nach anschließender Zerkleinerung ebenfalls zunächst mit Wasser (bis die Leitfähigkeit des Waschwassers unter 100 μSiemens gesunken war), dann mit 0,1 gew.-%iger Schwefelsäure (24 l in 12 h) und wieder mit Wasser pH-neutral gewaschen.

Anschließend wurde solange mit Methanol gewaschen, bis der Wassergehalt des abfließenden Methanols weniger als 0,3 Gew.-% betrug.

Die überkritische Trocknung erfolgte analog Beispiel 3. Die abschließende sechsstündige Trocknung wurde bei einem Druck von 0,2 bar und einer Temperatur von 200°C vorgenommen.

Charakteristische Daten der erhaltenen gemahlenen Produkte sind in Tabelle 2 aufgeführt.

Tabelle 2

| Beispiel | 4 | 5 | 6 | 7 | 8 | 9 | 10 |
|---|---|---|---|---|---|---|---|
| Pigment | 13,5 g Ruß | 26,9 g $TiO_2$ (Rutil) | 26,9 g Rotschlamm | 26,9 g $Fe_3O_4$(345) | 26,9 g $Fe_3O_4$(5001) | 26,9 g $Cr_{1,4}Fe_{0,6}O_3$ | 4,5 g Cu 9,0 g $TiO_2$ (12h gemahlen) 9,0 g $Cr_{1,4}Fe_{0,6}O_3$ |
| Zusatz-stoffe | 1,35 g hoch-disp. $SiO_2$, 0,67 Na-Ligninsulfonat | keine | keine | keine | keine | keine | keine |
| Primär-teilchen-größe in $\mu m$ | < 0,1 | 1,1 | 0,5-1 | 0,5 | 0,25 | 0,15 | Cu 1-10 $TiO_2$ 1 Cr.. 0,15 |
| Agglomerat-größe des Pig-mentes in Lsg.1 in $\mu m$ | 14,4 | 5,9 | 3,5 | 5,4 | 8,5 | 5,8 | Cu 18,1 $TiO_2$ 2,9 Cr.. 4,1 |
| berechn. Pig-mentgehalt in Gew.-% | 13,0 | 23,2 | 23,2 | 23,2 | 23,2 | 23,2 | Cu 4,0 $TiO_2$ 8,1 Cr.. 8,1 |
| mittl. Größe der Granulat-partikel in mm | 1,3 | 1,3 | 1,3 | 1,3 | 1,3 | 1,4 | 2,4 |
| Schüttdichte in kg/m³ | 182 | 193 | 200 | 199 | 178 | 200 | 205 |
| Wärmeleit-fähigkeit bei Mitteltemp. in W/mK (T in °C) | 0,041(240) | 0,048(280) 0,173(600) | 0,060(240) | 0,045(200) | 0,046(200) | 0,062(250) | 0,045(190) |

EP 0 396 076 B1

Beispiel 11

Die Umsetzung erfolgte analog Beispiel 3. Unterschiede bestehen in den verwendeten Rührergeschwindigkeiten und Reaktionszeiten. Als Ausgangslösungen wurden 1530 g 87 gew.-%ige Ameisensäure, in die 329,9 g Rutil eindispergiert wurden (1000 U/min, 30 min, mittlere Agglomeratteilchengröße von 5,1 μm gegenüber einer mittleren Primärteilchengröße von 1,1 μm), und 2970 g Natronwasserglaslösung (18 Gew.-% SiO$_2$) verwendet. Die Zugabe erfolgte innerhalb von 8 min, nachgerührt wurde bis zur einsetzenden Gelierung noch weitere 10 min mit 7000 U/min.

Nach Alterung über Nacht und mechanischer Zerkleinerung wurde analog Beispiel 3 gewaschen, allerdings unter Verwendung von 0,1 gew.-%iger Schwefelsäure. Die anschließende 20-stündige Waschung mit 20 l Methanol wurde bis zu einem Restwassergehalt von 3 Gew.-% vorgenommen.

Nach der analog Beispiel 3 erfolgten überkritischen Trocknung wurde noch 14 h bei einem Druck von 0,2 bar und einer Temperatur von 200°C nachgetrocknet.

Charakteristische Daten des erhaltenen gemahlenen Produktes sind in Tabelle 3 aufgeführt.

Beispiel 12

Es wurde analog Beispiel 11 vorgegangen. Als Pigmentbestandteil wurden 161,5 g gemahlener Glimmer (Muskovit, mittlere Primärteilchengröße von 17 μm, mittlere Agglomeratteilchengröße von 19,9 μm) innerhalb von 10 min mit 8000 U/min eingerührt.

Die methanolische Waschung erfolgte bis zu einem Restwassergehalt von 1,1 Gew.-%.

Charakteristische Daten s. Tabelle 3

Tabelle 3

| Beispiel | 1 | 2 |
|---|---|---|
| berechneter Pigmentgehalt | 38 Gew.-% Rutil | 23 Gew.-% Glimmer |
| mittl. Größe der Granulatpartikel | 1,2 mm | 1,3 mm |
| Schüttdichte | 282 kg/m$^3$ | 166 kg/m$^3$ |
| Wärmeleitfähigkeit λ bei 260 bzw. 210°C bei 596°C | 0,053 W/mK 0,203 W/mK | 0,055 W/mK – |

Beispiel 13

In 27,4 g 32 gew.-%ige Schwefelsäure wurden bei einer Temperatur von 0 bis 5°C innerhalb einer Minute 80,9 g Natronwasserglaslösung (18 Gew.-% SiO$_2$) unter Rühren zugetropft und die entstehende Mischlösung mit einigen Glaubersalzkristallen angeimpft. Nach Abfiltrieren des innerhalb von 30 min ausgefallenen Natriumsulfatdecahydrats wurden in das Filtrat 3 g hochdisperse Kieselsäure und 50 g Rutil intensiv eingerührt. Die resultierende rutilhaltige Sole wurde in Kunststofformen (Durchmesser 5 cm, Höhe 0,5 cm) gegossen und nach der Gelierung (ca. 1 min) mit Wasser pH-neutral gewaschen. Die methanolische Waschung wurde bis zu einem Restwassergehalt von weniger als 0,3 Gew.-% durchgeführt. Die anschließende überkritische Trocknung wurde analog Beispiel 3 vorgenommen.

Die resultierenden Scheiben aus rutilhaltigem Kieselsäureaerogel waren mechanisch intakt und wiesen einen Pigmentgehalt von 72 Gew.-% sowie eine Stoffdichte von 790 kg/m$^3$ auf.

Beispiel 14

Es wurde analog Beispiel 13 vorgegangen. Die Pigmentierung erfolgte jedoch durch Zugabe von 3 g hochdisperser Kieselsäure und einer Mischung aus 5 g Natriumligninsulfonat und 50 g Ruß, die zuerst miteinander vermahlen und mit einer kleinen Menge Methanol angeteigt wurden.

Die resultierenden ebenfalls mechanischen intakten Scheiben aus rußhaltigen Kieselsäureaerogel wiesen einen Pigmentgehalt von 71 Gew.-% sowie eine Stoffdichte von 340 kg/m$^3$ auf.

## Patentansprüche

1. Thermisches Isoliermaterial auf der Basis von pigmenthaltigen Kieselsäureaerogelen, erhältlich durch
a) Umsetzung einer wäßrigen Dispersion aus Wasserglas und einem Pigment mit einer starken Säure und-/oder von Wasserglas mit einer pigmenthaltigen starken Säure zu einem pigmenthaltigen Kieselsäurehydrogel, wobei das Pigment dadurch charakterisiert ist, daß es Infrarotstrahlung der Wellenlänge 3-10 μm streut, absorbiert oder reflektiert,
b) weitgehende Befreiung des so erhaltenen pigmenthaltigen Kieselsäurehydrogels von ionischen Bestandteilen durch Auswaschen mit Wasser,
c) Verdrängung des im Hydrogel enthaltenen Wassers durch eine leichtsiedende und gegenüber dem pigmenthaltigen Kieselsäuregel inerte Flüssigkeit,
d) Erhitzen des so erhaltenen flüssigkeitshaltigen Kieselsäuregels unter vollständiger Bedeckung durch die Flüssigkeit auf überkritische Bedingungen und
e) anschließendes Entfernen der Flüssigkeit vom Feststoff durch Entspannungsverdampfung bei überkritischer Temperatur.

2. Thermisches Isoliermaterial nach Anspruch 1, in welchem der Pigmentanteil 0,5 bis 75 Gew.-% beträgt.

3. Thermisches isoliermaterial nach Anspruch 2, in welchem der Pigmentanteil 5 bis 40 Gew.-% beträgt.

4. Thermisches Isoliermaterial nach den Ansprüchen 1 bis 3, bei dem das in Stufe (a) gemäß Anspruch 1 entstehende Reaktionsprodukt vor der Gelierung zum kohärenten Kieselsäurehydrogel als Formkörper gegossen worden ist.

5. Thermisches Isoliermaterial nach den Ansprüchen 1 bis 3, bei dem das in den Stufen (d) und (e) gemäß Anspruch 1 erhältliche Kieselsäureaerogel auf ein rieselfähiges Granulat von 0,01 bis 15 mm mittleren größten Durchmessers zerkleinert worden ist.

6. Thermisches Isoliermaterial nach den Ansprüchen 1 bis 3, erhältlich durch Umsetzung der Komponenten gemäß Stufe (a) in einer Mischdüse und Versprühen des Umsetzungsproduktes in Form feiner Tröpfchen.

7. Thermisches Isoliermaterial nach den Ansprüchen 1 bis 6, bei dem die überkritische Behandlung in Stufe (d) in Gegenwart eines Hydrophobierungsmittels vorgenommen worden ist.

8. Verfahren zur Herstellung von thermischem Isoliermaterial, dadurch gekennzeichnet, daß man es nach den in Anspruch 1 definierten Verfahrensschritten vornimmt.

## Claims

1. A thermal insulating material based on a pigment-containing silica aerogel, obtainable by
a) reacting either an aqueous dispersion of sodium silicate and a pigment with a strong acid or sodium silicate with a pigment-containing strong acid to give a pigment-containing silica hydrogel, the pigment being such that it scatters, absorbs or reflects infrared radiation of wavelength 3-10 μm,
b) substantially freeing the resulting pigment-containing silica hydrogel from ionic constituents by washing with water,
c) displacing the water in the hydrogel by a low-boiling liquid which is inert toward the pigment-containing silica gel,
d) heating the liquid-containing silica gel thus obtained under supercritical conditions while completely covered with the liquid, and
e) subsequently removing the liquid from the solid by flash vaporization at supercritical temperature.

2. A thermal insulating material as claimed in claim 1, wherein the pigment content is from 0.5 to 75% by weight.

3. A thermal insulating material as claimed in claim 2, wherein the pigment content is from 5 to 40% by weight.

4. A thermal insulating material as claimed in any of claims 1 to 3, wherein the reaction product formed in stage (a) of claim 1 is cast as a shaped article before being gelled to form the coherent silica hydrogel.

5. A thermal insulating material as claimed in any of claims 1 to 3, wherein the silica aerogel obtainable in stages (d) and (e) of claim 1 has been comminuted into free-flowing granules having an average largest dimension of from 0.01 to 15 mm.

6. A thermal insulating material as claimed in any of claims 1 to 3, obtainable by reacting the components of stage (a) in a mixing nozzle and spraying the reaction product in the form of fine droplets.

7. A thermal insulating material as claimed in any of claims 1 to 6, wherein the supercritical treatment in stage (d) has been carried out in the presence of a hydrophobizing agent.

8. A process for preparing a thermal insulating material, which comprises proceeding in accordance with the steps defined in claim 1.

**Revendications**

1. Matériau d'isolation thermique à base d'aérogels d'acide silicique pigmentés, obtenu par
a) transformation d'une dispersion aqueuse de silicate de sodium et d'un pigment avec un acide fort et/ou de silicate de sodium avec un acide fort pigmenté en un hydrogel d'acide silicique pigmenté, le pigment étant caractérisé en ce qu'il disperse, absorbe ou réfléchit le rayonnement infrarouge d'une longueur d'onde de 3 à 10 μm,
b) élimination poussée des constituants inoniques de l'hydrogel d'acide silicique pigmenté obtenu, par lavage à l'eau,
c) déplacement de l'eau contenue dans l'hydrogel par un liquide de bas point d'ébullition et inerte vis-à-vis du gel d'acide silicique pigmenté,
d) chauffage du gel d'acide silicique contenant un liquide ainsi obtenu avec recouvrement complet par le liquide dans des conditions surcritiques et
e) élimination subséquente du liquide à partir du produit solide par vaporisation éclair à une température surcritique.

2. Matériau d'isolation thermique selon la revendication 1, dans lequel la proportion de pigment se monte à 0,5-75% en poids.

3. Matériau d'isolation thermique selon la revendication 2, dans lequel la proportion de pigment se monte à 5-40%.

4. Matériau d'isolation thermique selon les revendications 1 à 3, dans lequel le produit de réaction qui se forme dans l'étape (a) de la revendication 1 a été coulé sous forme de corps façonné avant la gélification en hydrogel d'acide silicique cohérent.

5. Matériau d'isolation thermique selon les revendications 1 à 3, dans lequel l'aérogel d'acide silicique obtenu dans les étapes (d) et (e) de la revendication 1 a été broyé en un granulat fluide de diamètre maximum moyen de 0,01 à 15 mm.

6. Matériau d'isolation thermique selon les revendications 1 à 3, obtenu par transformation des composants selon l'étape (a) dans une buse mélangeuse et pulvérisation du produit de transformation sous forme de fines gouttelettes.

7. Matériau d'isolation thermique selon les revendications 1 à 6, dans lequel les conditions surcritiques de l'étape (d) ont été conduites en présence d'un agent de traitement hydrophobe.

8. Procédé de préparation de matériau d'isolation thermique, caractérisé en ce qu'on l'effectue selon les étapes de procédé définies dans la revendication 1.